Europäisches Patentamt

European Patent Office

Office européen des brevets

(19)

(11) Veröffentlichungsnummer: **0 019 681**
A2

# (12) EUROPÄISCHE PATENTANMELDUNG

(21) Anmeldenummer: 80100288.2

(22) Anmeldetag: 21.01.80

(51) Int. Cl.³: **C 08 F 8/12,** D 01 F 6/18, C 08 J 7/12, A 61 L 15/00 // C08F20/44

(30) Priorität: 29.01.79 DE 2903267

(43) Veröffentlichungstag der Anmeldung: **10.12.80** Patentblatt 80/25

(84) Benannte Vertragsstaaten: **AT BE CH DE FR GB IT NL**

(71) Anmelder: **HOECHST AKTIENGESELLSCHAFT, Postfach 80 03 20, D-6230 Frankfurt/Main 80 (DE)**

(72) Erfinder: **Holst, Arno, Dr., Drususstrasse 3, D-6200 Wiesbaden (DE)**
Erfinder: **Perplies, Eberhard, Dr., Rhönstrasse 11, D-6229 Walluf (DE)**
Erfinder: **Buchberger, Gerhard, Tannenring 56, D-6200 Wiesbaden (DE)**

(54) Verfahren zur Herstellung von Acrylpolymeren mit hoher Wasserquellfähigkeit und deren Verwendung.

(57) Die Erfindung betrifft ein Verfahren zur Herstellung von mindestens größtenteils wasserunlöslichen Acrylpolymeren mit hoher Wasserquellfähigkeit durch Umsetzung von Polyacrylnitril oder Copolymeren auf der Basis von Acrylnitril mit wäßrig-alkalischen Lösungen, die gegebenenfalls ein mit Wasser mischbares Lösemittel enthalten. Das Polymere wird in diesem Verfahren bei einer Temperatur von mehr als 100° C umgesetzt, insbesondere mit wäßrig-alkalischen, einen ein- oder mehrwertigen, aliphatischen oder cycloaliphatischen Alkohol eines Siedepunktes von ≧ 110° C enthaltenden Lösungen. In einer anderen bevorzugten Variante des Verfahrens wird das Polymere unter Überdruck umgesetzt. Die derart hergestellten Acrylpolymeren können beispielsweise zur Aufnahme und/oder Zurückhaltung von wäßrigen Flüssigkeiten oder von Feuchte verwendert werden.

EP 0 019 681 A2

0019681

HOECHST AKTIENGESELLSCHAFT
KALLE Niederlassung der Hoechst AG

Hoe 79/K 003      - 1 -      18. Januar 1980
WLK-Dr.I.-db

Verfahren zur Herstellung von Acrylpolymeren mit hoher
Wasserquellfähigkeit und deren Verwendung

Die Erfindung betrifft ein Verfahren zur Herstellung von
Acrylpolymeren aus Polyacrylnitril unter Reaktionsbedingungen, die zu einem mindestens größtenteils wasserunlöslichen Reaktionsprodukt mit hoher Wasserquellfähigkeit
führen und die Verwendung dieser Acrylpolymeren.

Polyacrylnitrilfasern oder als Pulver oder Granulate vorliegende Polyacrylnitrile können als hydrophobe Polymere
bezeichnet werden, da Wassermoleküle sie nicht oder nur
unwesentlich zur Quellung bringen. Es hat deshalb nicht
an Versuchen gefehlt, die Polyacrylnitrilpolymeren derart
zu modifizieren, daß durch Veränderung ihrer chemischen
Struktur - insbesondere durch chemische Reaktion an der
Nitrilgruppe - oder ihrer physikalischen Struktur - insbesondere durch Erzeugung von Hohlräumen oder Lücken in der
Polymerstruktur oder dem Polymergefüge - hydrophilere
Polymere entstehen könnten.

Zur beabsichtigten Veränderung der chemischen Struktur sind
im wesentlichen 3 Verfahrensvarianten bekannt geworden:

A:      Umsetzung von Polyacrylnitril mit alkalischen Reaktionspartnern (Hydrolyse) zu Polyacrylamid, Polyacrylsäure oder teilhydrolisiertem Polyacrylnitril
oder Polyacrylamid oder entsprechenden Copolymeren;
die Reaktionsprodukte sollen im allgemeinen wasserlöslich sein.

0019681

HOE.CHST AKTIENGESELLSCHAFT
KALLE Niederlassung der Hoechst AG

- 2 -

B:  Erzeugung von modifizierten Arten der nach A herstellbaren, wasserlöslichen Produkte durch Umsetzung von
Acrylamid und/oder Acrylsäure mit bifunktionellen
Verbindungen (Vernetzungsmittel) in Copolymerisationstechnik, durch Umsetzung von Polyacrylamid, Polyacrylsäure, teilhydrolisiertem Polyacrylnitril und/oder
Polyacrylamid zu Salzen oder durch Vernetzung dieser
Polymeren; die Reaktionsprodukte können auch wasserunlöslich und quellfähig sein, weisen jedoch im allgemeinen eine zu geringe Sauggeschwindigkeit auf.

C:  Chemische Veränderung von mindestens einigen der
Nitrilgruppen durch bestimmte reaktionsfähige Verbindungen und anschließende Hydrolyse oder Teilhydrolyse der Zwischenprodukte; die Reaktionsprodukte können auch quellfähig sein, es ist jedoch
der zusätzliche Modifizierungsschritt erforderlich.

Im einzelnen wurden diese Verfahrensvarianten insbesondere
in den folgenden Druckschriften beschrieben:

In Houben-Weyl, Methoden der organischen Chemie, IV. Auflage,
Band XIV/2, 1963, Seite 708 ff. wird zur Hydrolyse von Polyacrylnitril mit Alkalihydroxiden angegeben, daß sie in
wäßrigem Medium oder in unverdünnten Alkoholen unter Normaldruck oder im Autoklaven durchgeführt werden kann; die
Hydrolyseprodukte tragen neben Carboxylat- auch Carbonamidgruppen und sind wasserlöslich. Die Hydrolyse kann nicht
nur mit Polyacrylnitrilpulvern sondern auch mit -fasern
erfolgen.

Aus den Ausführungen unter dem Stichwort "Polyacrylamide" in "Water-Soluble Resins", herausgegeben von R. L. Davidson und M. Sittig, Reinhold Publishing Corporation, New York, 1962, Seite 153 ff. kann entnommen werden, daß Polyacrylamide oder auch ihre Copolymeren beispielsweise auf Basis von Acrylamid/Acrylsäure üblicherweise in kaltem Wasser löslich sind. Hydrolisierte oder teilhydrolisierte Polyacrylamide oder Acrylamid/Acrylsäure-Copolymere können durch Zugabe von dreiwertigen Kationen (z. B. $Al^{3+}$) unlöslich gemacht werden. Andere Alternativen zum Unlöslichmachen des Polyacrylamids sind a) mehrstündiges Erhitzen mit NaOH auf $90^{\circ}$ C und Zugeben eines dreiwertigen Kations, b) Reaktion mit Glyoxal unter alkalischen Bedingungen, c) Reaktion mit Formaldehyd bei einem pH-Wert von etwa 10,0 bis 10,5 und abschließende Behandlung mit Säuren, freien Radikalen oder durch Erhitzen oder d) mehrminütiges Erhitzen mit Essigsäureanhydrid.

Nach der US-PS 3 229 769 sind vernetzte, wasserunlösliche, unter dem Einfluß von Wasser quellbare Polyacrylderivate entweder durch Ionenstrahlung vernetzte Salze von Polyacrylsäure oder ihren Derivaten oder durch chemische Vernetzungsmittel vernetzte Polymere oder Copolymere auf Basis von Acrylamid oder Acrylsäure; unvernetzte wasserlösliche Polyacrylderivate sollen zwar verdickende Eigenschaften beispielsweise für wäßrige Flüssigkeiten aufweisen, aber für die Anwendung als quellbare Verbindung nicht oder nicht in genügendem Maße geeignet sein.

HOECHST AKTIENGESELLSCHAFT
KALLE Niederlassung der Hoechst AG

- 4 -

In der FR-PS 1 389 274 wird ein Verfahren zur Herstellung von vernetzten, teilhydrolisierten Polyacrylamiden beschrieben, bei dem a) Acrylamid mit Vernetzungsmitteln copolymerisiert wird und b) etwa 20 bis 40 % der Amidgruppen durch die Einwirkung von Alkalihydroxid zu Carboxylatgruppen hydrolisiert werden.

Aus der US-PS 2 810 716 ist ein Verfahren zur Herstellung von durch chemische Vernetzungsmittel vernetzten Polymeren bekannt, bei dem geeignete Monomere wie Acrylsäure oder Acrylamid und entsprechende Derivate mit mehrfach-ungesättigten Verbindungen copolymerisiert werden. Das Verfahren wird in Anwesenheit von Copolymerisations-Initiatoren, von zweiwertigen anorganischen Ionen, Wasser, einem Suspendierhilfsmittel und gegebenenfalls einem organischem Lösemittel durchgeführt und liefert Produkte, die 0,01 bis 0,2 % der vernetzenden, ursprünglich mehrfach-ungesättigten Verbindung aufweisen und quellfähig sind.

In der DE-AS 23 58 853 (= GB-PS 1 447 536) wird ein Verfahren zur Herstellung von modifizierten Polyacrylfasern aus Polyacrylnitril beschrieben, bei dem a) Polyacrylnitril oder Copolymere auf Basis von Polyacrylnitril mit Hydroxylamin bei Temperaturen von $70^{\circ}$ bis $110^{\circ}$ C bis zu einem Amidoximgruppen-Gehalt von mindestens 0,05 mMol/g Fasern behandelt, b) diese Fasern in wäßrig-alkalischer Lösung bis zu einem Carboxylgruppen-Gehalt von 4 bis 10 mMol/g Fasern hydrolisiert, und c) während oder nach der Hydrolyse mindestens 3 mMol/g der Carboxylgruppen in das Li-, K-, Na- und/oder $NH_4$-Salz überführt werden.

HOE.CHST AKTIENGESELLSCHAFT
KALLE Niederlassung der Hoechst AG

- 5 -

Aufgabe der vorliegenden Erfindung ist es, ein Verfahren zur Herstellung von quellfähigen Polyacrylderivaten vorzuschlagen, bei dem Polyacrylnitril oder Copolymere auf Basis von Polyacrylnitril ohne Zugabe von zusätzlichen chemischen Vernetzungsmitteln oder andersartigen chemischen Modifizierungsmitteln durch Hydrolyse in quellfähige Polyacrylderivate überführt werden können.

Die Erfindung geht aus von dem bekannten Verfahren zur Herstellung von (wasserlöslichen) Acrylpolymeren durch Umsetzung von Polyacrylnitril oder Copolymeren auf Basis von Acrylnitril mit wäßrig-alkalischen, gegebenenfalls ein mit Wasser mischbares organisches Lösemittel enthaltenden Lösungen. Das erfindungsgemäße Verfahren führt jedoch zu mindestens größtenteils wasserunlöslichen Acrylpolymeren mit hoher Wasserquellfähigkeit und ist dadurch gekennzeichnet, daß das Polymere bei einer Temperatur von mehr als $100^{\circ}$ C umgesetzt wird.

Unter dem Begriff "mindestens größtenteils wasserunlöslich" ist zu verstehen, daß die erfindungsgemäß hergestellten Acrylpolymeren zu mehr als 50 Gew.-%, insbesondere zu mehr als 80 Gew.-%, wasserunlöslich sind; wenn diese Acrylpolymeren mit wäßrigen Flüssigkeiten, insbesondere mit mehr als 50 Gew.-% Wassergehalt, oder mit anderweitig mit ihnen in Kontakt tretenden Wassermolekülen (z. B. Wasserdampf) in Wechselwirkung treten, quellen sie. Die erfindungsgemäß hergestellten Acrylpolymeren liegen entweder als Fasern in einer Länge von etwa 0,01 bis 200 mm, insbesondere von etwa 0,1 bis 150 mm, oder als Pulver oder Granulate vor.

Als Ausgangsmaterial für das erfindungsgemäße Verfahren eignen sich Homopolymere des Acrylnitrils oder Copolymere des Acrylnitrils mit bevorzugt einem Anteil von mindestens 70 Gew.-% Acrylnitril. Als Copolymerkomponente sind insbesondere Vinylmonomere wie Vinylacetat, Vinylchlorid, Vinylidenchlorid, Vinylbromid, Acrylsäure oder Methacrylsäure und deren Ester, Acrylamid, Methacrylamid, Maleinsäure, Styrol oder Gemische dieser Monomeren geeignet. Bevorzugt wird das Ausgangsmaterial in Faserform eingesetzt. Die Beschaffenheit der Fasern kann den jeweiligen Zielsetzungen angepaßt werden, dies gilt beispielsweise hinsichtlich der Größe, der Querschnittsform oder der Polymerenkonfiguration. Die Fasern können als Stapelfaser, Kabel, Faserstrang, Garn oder Textil eingesetzt werden; bei Einsatz von Garnen oder Textilien aus oder auf Basis von Polyacrylnitril bestehen diese jedoch zweckmäßig aus Einzelfäden, um eine ausreichende Umsetzung zu gewährleisten.

Die Hydrolyse des Polyacrylnitrils oder der Copolymeren auf Basis von Acrylnitril wird in wäßrig-alkalischem Medium durchgeführt, als Alkalien sind beispielsweise die Hydroxide, Carbonate und Hydrogencarbonate des Lithiums, Kaliums oder Natriums zu nennen, aus wirtschaftlichen Gründen kommt jedoch fast immer nur NaOH in Betracht. Die Konzentration der wäßrigen Lösungen kann in weiten Grenzen variieren, sie beträgt zweckmäßig etwa 0,1 bis 60 Gew.-%. Zur Durchführung des erfindungsgemäßen Verfahrens können insbesondere die beiden folgenden Varianten eingesetzt werden:

- Hydrolyse des Polyacrylnitrils in alkalischen Wasser/organisches Lösemittel-Gemischen bei Temperaturen über $100^{\circ}$ C unter Normaldruck.

- Hydrolyse des Polyacrylnitrils in alkalischwäßrigem Medium bei Temperaturen über $100^{\circ}$ C unter Überdruck.

Die erste der beiden Verfahrensvarianten wird in einem alkalischen Wasser/organisches Lösemittel-Gemisch durchgeführt, wobei der Anteil des organischen, mit Wasser mischbaren Lösemittels im Regelfalle größer als der Anteil des Wassers im Gemisch ist, er beträgt beispielsweise 5 bis 20 Gew.-Teile pro Gew.-Teil Wasser. Häufig ist es ausreichend, den Wasseranteil auf den durch die Verwendung von fertigen wäßrigen alkalischen Lösungen in das Gemisch eingebrachten Wasseranteil zu beschränken. Als organisches Lösemittel wird bevorzugt ein ein- oder mehrwertiger, aliphatischer oder cycloaliphatischer Alkohol eines Siedepunkts von $\geq 110^{\circ}$ C verwendet, insbesondere sind dies n-Butanol (Kp = $118^{\circ}$ C), Cyclohexanol (Kp = $161^{\circ}$ C), Glykol (Kp = $197^{\circ}$ C) oder Glycerin (Kp = $290^{\circ}$ C). Die erfindungsgemäß erforderliche Temperatur von mehr als $100^{\circ}$ C wird dann als Endpunkt der Temperatur des Reaktionsgemisches gegen Ende der Reaktionsdauer von zweckmäßig etwa 0,5 bis 5 Std. betrachtet, die Reaktiondauer ist u. a. von dem Lösemittel-Typ abhängig. Das Ende der erfindungsgemäßen chemischen Reaktion von Polyacrylnitril oder Copolymeren auf Basis von Acrylnitril zu den mindestens größtenteils wasserunlöslichen Acrylpolymeren mit hoher Wasserquellfähigkeit kann beispielsweise bei der Umsetzung von faserigem Ausgangsmaterial daran erkannt werden, daß sich die Farbe des Polymeren von zunächst gelb, über dunkelrot wieder nach hellerem rot, gelb oder bis zu farblos verändert. Das Endprodukt der Reaktion kann in Faser- oder Pulverform vorliegen oder zu Pulvern gemahlen werden. Wenn die Reaktion vor Ablauf der vollständigen chemischen Umsetzung (beispielsweise erkennbar an der noch nicht erfolgten Farbänderung von dunkelrot nach hellgelb) abgebrochen wird, so werden Produkte erhalten, die meistens noch geringere Quelleigenschaften aufweisen. Die Hydrolysedauer kann zwar auch nach größeren Werten hin verlängert werden, jedoch sind dem aus wirtschaftlichen Gründen Grenzen gesetzt, außerdem wird bei längerer Hydrolysedauer, d. h. länger als es für ein Produkt mit guten Eigenschaften unbedingt erforderlich ist, die erfindungsgemäß wichtige Eigenschaft der Quellfähigkeit eher wieder negativ beeinflußt.

Die zweite der beiden Verfahrensvarianten wird in einem alkalisch-wäßrigen Medium ohne Zusatz eines organischen Lösemittels unter Überdruck durchgeführt. Der Überdruck muß dabei so gewählt werden, daß eine Temperatur des Reaktionsgemisches von mehr als $100^{\circ}$ C, bevorzugt von mehr als $115^{\circ}$ C, erreicht wird; die Reaktion wird zweckmäßig in einem Autoklaven aus Glas oder Metall ausgeführt. Die Reaktionsdauer ist u. a. von dem Verhältnis "freier Gasraum über der Reaktionsmischung zu Gesamtvolumen des Reaktionsgefäßes" abhängig, d. h. je größer der freie Gasraum ist, desto eher kann er den bei der Hydrolyse entstehenden Ammoniak ($NH_3$) aufnehmen oder reaktionskinetisch ausgedrückt, kann damit eines der Reaktionsprodukte aus dem eigentlichen Reaktionsgleichgewicht in der flüssigen Reaktionsmischung entzogen werden, wodurch sich das Reaktionsgleichgewicht auf die Produktseite (die u. a. das erfindungsgemäß erwünschte Acrylpolymere enthält) verschiebt; die
Reaktionszeiten können so beispielsweise von etwa 1 Std.
bis auf etwa 10 min gesenkt werden, im allgemeinen liegt
die Reaktionsdauer - abhängig von den Bedingungen - im Bereich
von etwa 0,05 bis 2 Std.. Das Ende der erfindungsgemäßen
Reaktion kann ebenso wie bei der ersten Verfahrensvariante
durch eine entsprechende Farbänderungsreihe erkannt werden;
dies kann beispielsweise in einem Glasautoklaven gut beobachtet werden.

Die Menge an einzusetzendem Alkali ist einerseits abhängig
von der Art der Umsetzung, d. h. beispielsweise muß bei
großem Anteil an organischem Lösemittel und/oder Wasser im
Reaktionsgemisch auch der Alkalianteil groß sein, um eine
wirtschaftlich vertretbare Reaktionsdauer zu erzielen, oder
(s. o.) durch Verschiebung des Reaktionsgleichgewichts im
Druckgefäß kann auch die erforderliche Alkalikonzentration
beeinflußt werden, andererseits ist sie aber auch von der
Reaktionstemperatur abhängig, d. h. je höher diese ist,
desto weniger Alkali ist im allgemeinen erforderlich. Zweckmäßig liegt der Bereich an eingesetztem Alkali bei etwa 0,1
bis 10 Mol pro Mol Polyacrylnitril (diese Molangabe bezieht
sich auf die Polymereneinheit $-CH_2-CH(CN)-$), die Konzentration
an Alkali im Reaktionsgemisch bei etwa 0,1 bis 60 Gew.-%.

Die erfindungsgemäß hergestellten Acrylpolymeren zeigen ein
gutes Saug- und Quellvermögen und können die aufgenommene
Menge an Flüssigkeit auch in ausreichender Menge zurückhalten;

- 10 -

dabei treten signifikante Verbesserungen gegenüber dem Stand der Technik (siehe Vergleichsversuche) auf. Die Polymeren werden weder durch Säuren noch durch Alkalien, beispielsweise bei Temperaturen bis zu etwa 60° C, abgebaut. Ferner zeigen besonders die durch hochsiedende Alkohole anhydrolysierten Materialien eine sehr hohe Feuchteaufnahme (gemessen in Anlehnung an DIN 53 304).

Es wird angenommen, daß das erfindungsgemäß hergestellte Polymere neben den anfänglich (d. h. vor der Reaktion) ausschließlich oder in größerem Anteil vorhandenen Nitrilgruppen nach der erfolgten Hydrolyse unter den erfindungsgemäßen Bedingungen auch Amid- und Carboxylatgruppen trägt. Da der Anteil (DS) dieser letztgenannten Gruppen im Molekül (nach Analysenergebnissen) jedoch nur im Bereich von etwa (Minimum jeweils 0 und Maximum jeweils 1) $DS_{Amid}$ : 0,05 bis 0,20 und $DS_{Carboxylat}$ : 0,002 bis 0,15 liegt, dürften zusätzlich auch noch weitere intermolekulare und/oder intramolekulare Reaktionen stattfinden, wofür auch die auftretenden Farbänderungen sprechen könnten. Es könnten außerdem auch physikalische Veränderungen am Molekül stattgefunden haben. Falls die mit dem Acrylnitril copolymerisierten Monomeren Amid- oder Estergruppen aufweisen, kann angenommen werden, daß auch aus diesen funktionellen Gruppen unter den erfindungsgemäßen Hydrolysebedingungen Carboxylatgruppen gebildet werden.

Die erfindungsgemäß hergestellten Produkte können insbesondere zur Aufnahme und/oder Zurückhaltung von wäßrigen Flüssigkeiten oder von Feuchte Verwendung finden. Zu diesen Anwendungsgebieten zählen beispielsweise das Aufsaugen von physiologischen Flüssigkeiten, wie Harn, Blut, Schweiß oder Speichel bei der Babypflege, der Monatshygiene oder im Arzt- und Krankenhausbedarf; die erfindungsgemäß hergestellten Polymeren werden in die dabei zur Anwendung gelangenden Saugmassen, in beispielsweise Tampons, Monatsbinden, Vliese, Windeln oder Bettunterlagen als Zusatz eingearbeitet oder sind deren alleiniger Bestandteil. Aufgrund der außerordentlich großen Feuchteaufnahme ist ein weiteres Anwendungsgebiet für die erfindungsgemäß hergestellten Polymeren die Verbesserung der Wasserdampfaufnahmefähigkeit und Wasserdampfdurchlässigkeit von gebundenen Vliesen, selbsttragenden flächigen Polymergebilden oder Beschichtungen, die für verschiedene technische Anwendungsgebiete von Interesse sind. Dazu zählen ihre substituierenden Anwendungen vor allem für Leder oder bestimmte Textilien auf deren Einsatzgebieten, z. B. für Schuhe (Schuhobermaterial, Futter, Sohlen), Täschnerwaren, Polsterbezüge, Oberbekleidung ("Leder"- und Allwetterkleidung), Textilien bzw. Haushaltshilfsmittel (Tischdecken, Fenster-"Leder", Wischtücher) oder für Abdeckungen (Zeltmaterial, Planen).

Unter den in der Beschreibung und den Beispielen zur Charakterisierung der erfindungsgemäß hergestellten Acrylpolymeren oder der Produkte in Vergleichsbeispielen verwendeten Parametern ist folgendes zu verstehen:

WRV Wasserrückhaltevermögen des Acrylpolymeren in g $H_2O$, gemessen gegen 1600-fache Erdbeschleunigung, bezogen auf 100 g seines wasserunlöslichen Anteils; das WRV wird nach Eintauchen der Probe in Wasser bestimmt,

WUA wasserunlöslicher Anteil im Acrylpolymeren in Gew.-%

0019681

SV$_{NaCl}$ Saugvermögen des Acrylpolymeren in g an 1 %iger wäßriger NaCl-Lösung, die von 100 g des Polymeren aufgesaugt werden.

DS    Substitutionsgrad, bezogen auf die Zahl der Substituenten pro Polymereinheit (im Falle des Polyacrylnitrils beträgt der D. S. max. 1)

Vergleichsbeispiel V 1

Es wird in Anlehnung an die Angaben des Beispiels 1 (Produkt D) der DE-AS 23 58 853 vorgegangen, d. h. 10 g einer kurzgeschnittenen (ca. 1 cm Länge) Polyacrylnitrilfaser (Copolymerisat aus etwa 94 % Acrylnitril und etwa 6 % Acrylsäuremonomethylester) werden mit 500 ml einer wäßrigen Hydroxylaminsulfat-Lösung (Gehalt 30 g Sulfat pro Liter) versetzt, der pH-Wert wird mit wäßriger NaOH-Lösung auf einen pH-Wert von 8,5 eingestellt und das Gemisch etwa 1 Std. am Rückfluß erhitzt. Die gelben Fasern werden von den flüssigen Komponenten abgetrennt und einer zweistündigen Hydrolyse bei 100° C in 500 ml einer wäßrigen NaOH-Lösung (Gehalt 15 g NaOH pro Liter) unterworfen. Die flüssigen Komponenten werden abgetrennt und die Fasern in einen Überschuß an 2 n wäßriger Salzsäure eingetaucht, nach dem Abtrennen von den flüssigen Komponenten und sorgfältigem Waschen wird durch Eintauchen der Fasern in eine wäßrige NH$_3$-Lösung das Ammoniumsalz des Polymeren dargestellt. Das Reaktionsprodukt wird bei 60° C getrocknet.

Vergleichsbeispiele V 2 und V 3

Es wird in Anlehnung an die Angaben des Beispiels 2 (Produkte L und M) der DE-AS 23 58 853 vorgegangen, d. h. in Abwandlung der Vorschrift des Vergleichsbeispiels V 1 werden das K-Salz bzw. das Na-Salz des Polymeren dargestellt, indem statt in eine wäßrige $NH_3$-Lösung in eine wäßrige NaOH- bzw. KOH-Lösung eingetaucht wird.

Vergleichsbeispiel V 4

Es wird in Anlehnung an die Angaben des Beispiels 5 der DE-AS 23 58 853 vorgegangen, d. h. 10 g einer kurzgeschnittenen Polyacrylnitrilfaser (siehe V 1) werden mit 500 ml einer wäßrigen Lösung eines Gehalts von 40 g Hydroxylaminhydrochlorid und 40 g $Na_2HPO_4$ und eines pH-Wertes von etwa 7,1 versetzt und das Gemisch etwa 2 Std. am Rückfluß erhitzt. Die Fasern werden von den flüssigen Komponenten abgetrennt und einer 45 minütigen Hydrolyse bei $100^o$ C in 50 g einer wäßrigen $Na_2CO_3$-Lösung (Gehalt von 2 g $Na_2CO_3$) unterworfen, das feuchtgequollene Material wird im Vakuum getrocknet und liegt im wesentlichen als Na-Salz vor.

Die in den Vergleichsbeispielen dargestellten Polymeren haben eine faserige Struktur, sind nach dem Trocknen spröde und können dann durch Mahlen auch in die Pulverform überführt werden. Nach der Zugabe von Wasser saugen die Produkte dieses nach kurzzeitiger Anquellverzögerung begierig auf. Die mit diesen, aus dem Stand der Technik bekannten Produkten erhaltenen Meßergebnisse sind in der folgenden Tabelle dargestellt.

HOECHST AKTIENGESELLSCHAFT
KALLE Niederlassung der Hoechst AG

- 14 -

Tabelle

| Beispiel | WUA | WRV | $SV_{NaCl}$ |
|----------|-----|-----|-------------|
| V 1 | 98 | 2.700 | 1.400 |
| V 2 | 98 | 7.550 | 2.520 |
| V 3 | 96 | 4.200 | 2.560 |
| V 4 | 97 | 43 | 1.140 |

Vergleichsbeispiel V 5

Eine einstündige Hydrolyse von Polyacrylnitrilfasern
(siehe V 1) in 25 Gew.-%iger wäßriger NaOH-Lösung bei
100° C führt nur zu einer oberflächlichen Veränderung
der Fasern, d. h. nur die oberen Schichten der Fasern
lösen sich nach dieser Hydrolyse langsam in Wasser auf
und ein fester, offensichtlich unveränderter Faserkern
bleibt zurück. Die Faser zeigt demnach bei kaum verringerter Festigkeit zwar oberflächlich hydrophile Eigenschaften
(einhergehend mit einer Gelbfärbung), ein Quellvermögen
kann aber nicht beobachtet werden.


Beispiel 1

In einem Glasgefäß werden 200 ml n-Butanol, 20 g einer 50 Gew.-%igen
wäßrigen NaOH-Lösung und 10 g Wasser auf 60° C unter Rühren
erwärmt und 5 g einer kurzgeschnittenen Polyacrylnitrilfaser
(siehe V 1) zugegeben. Das Reaktionsgemisch wird am Rückfluß
jeweils 30 min, 60 min und 90 min erhitzt, die Temperatur
des Reaktionsgemisches beträgt nach Abschluß der Reaktion
101° C. Wenn statt des n-Butanols Cyclohexanol, Glykol oder Glycerin eingesetzt werden, so betragen die entsprechenden Temperaturen des Reaktionsgemisches 110° C, 144° C und 131° C. Die Fasern werden zunächst gelb, dann dunkelrot und schließlich hellgelb bis farblos, bei Erreichen der letztgenannten Färbung ist die Umsetzung weitgehend abgeschlossen. Nach Abkühlen der jeweiligen Reaktionsgemische werden die flüssigen Komponenten von der gelartigen Fasermasse abgetrennt, die (je nach Dauer der Hydrolyse) mehr oder weniger stark hydrolisierten Polyacrylnitrilfasern werden in 1 bis 2 ltr. Wasser zu einer Suspension aufgerührt. Durch vorsichtige Zugabe von etwa 15 bis 20 Gew.-%iger wäßriger HCl-Lösung zu der Suspension läßt sich die freie Säure des hydrolisierten Acrylpolymeren ausfällen. Nach Abtrennen der flüssigen Komponenten wird das faserige Acrylpolymere durch Zugabe von verdünnter wäßriger $NH_3$-Lösung zum Quellen gebracht und durch langsame Zugabe von Aceton geflockt. Das entstehende $NH_4$-Salz ist gut von den flüssigen Komponenten abtrennbar und wird bei 60° C getrocknet. Das in wattiger Form vorliegende Produkt hat folgende Charakteristika: WUA = 98, WRV = 4.000 bis 12.000 (je nach Hydrolysedauer), $SV_{NaCl}$ = 3.000.

## Beispiel 2

Es wird nach den Angaben des Beispiels 1 vorgegangen, aber mit 200 ml Glycerin, 16 g einer wäßrigen 50 Gew.-%igen NaOH-Lösung, 16 g Wasser und 5 g der Polyacrylnitrilfasern. Die Reaktionsmischung wird auf etwa 130° C während 1 1/4 Std. aufgeheizt. Das zunächst in faseriger Form anfallende $NH_4$-Salz wird nach dem Trocknen durch Mahlen in die Pulverform überführt, die folgende Charakteristika aufweist: WUA = 97, WRV = 100.000, $SV_{NaCl}$ = 6.300.

Beispiel 3

In einem ein Volumen von 400 ml aufweisenden Glasautoklaven werden 5 g der Polyacrylnitrilfasern mit 200 g einer 20 Gew.-%igen wäßrigen NaOH-Lösung vermischt. Das verschlossene Gefäß wird bei 140° C etwa 1 1/4 Std. aufgeheizt. Während der Reaktion können die in Beispiel 1 geschilderten Farbänderungen ebenfalls beobachtet werden. Das nach der Entlüftung des Autoklaven entnommene Reaktionsgemisch wird in Wasser suspendiert, mit verdünnter wäßriger HCl-Lösung angesäuert und die festen Komponenten werden von den flüssigen abgetrennt. Das Acrylpolymere wird durch Zugabe von verdünnter wäßriger $NH_3$-Lösung zum Quellen gebracht und durch Zugabe von Aceton geflockt. Das entstehende $NH_4$-Salz ist gut von den flüssigen Komponenten abtrennbar und wird bei 60° C getrocknet. Das in amorpher Form vorliegende Produkt hat folgende Charakteristika: WUA = 99, WRV = 53.000, $SV_{NaCl}$ = 6.700.

Beispiel 4

In einem ein Volumen von 1,5 ltr. aufweisenden Glasautoklaven, der mit Wasserdampf vorgeheizt wurde, werden 10 g der Polyacrylnitrilfasern, 6 g einer 50 Gew.-%igen wäßrigen NaOH-Lösung und 500 g Wasser vermischt. Das verschlossene Gefäß wird mit überhitztem Wasserdampf während etwa 10 min direkt beheizt, wobei durch ein Überdruckventil gleichzeitig auch Teile des bei der Hydrolyse der Nitrilgruppe entstehenden Ammoniaks aus der Reaktionsmischung entfernt werden. Nach der Entlüftung des Autoklaven wird das Reaktionsgemisch abgelassen und mit Essigsäure neutralisiert; die Fasern werden mit Wasser gewaschen und getrocknet. Das in faseriger Form vorliegende Na-Salz hat folgende Charakteristika: WUA = 96, WRV 2.500, $SV_{NaCl}$ = 1.920.

## Patentansprüche

1. Verfahren zur Herstellung von mindestens größtenteils wasserunlöslichen Acrylpolymeren mit hoher Wasserquellfähigkeit durch Umsetzung von Polyacrylnitril oder Copolymeren auf Basis von Acrylnitril mit wäßrig-alkalischen, gegebenenfalls ein mit Wasser mischbares organisches Lösemittel enthaltenden Lösungen, dadurch gekennzeichnet, daß das Polymere bei einer Temperatur von mehr als $100^{\circ}$ C umgesetzt wird.

2. Verfahren nach Anspruch 1, dadurch gekennzeichnet, daß das Polymere mit wäßrig-alkalischen, einen ein- oder mehrwertigen, aliphatischen oder cycloaliphatischen Alkohol eines Siedepunktes von $\geq 110^{\circ}$ C enthaltenden Lösungen umgesetzt wird.

3. Verfahren nach Anspruch 1 oder 2, dadurch gekennzeichnet, daß das Polymere mit wäßrig-alkalischen, n-Butanol, Cyclohexanol, Glykol oder Glycerin enthaltenden Lösungen umgesetzt wird.

4. Verfahren nach Anspruch 1, dadurch gekennzeichnet, daß das Polymere unter Überdruck umgesetzt wird.

5. Verwendung der nach einem Verfahren gemäß einem der Ansprüche 1 bis 5 hergestellten Acrylpolymeren zur Aufnahme und/oder Zurückhaltung von wäßrigen Flüssigkeiten oder von Feuchte.